# EUROPÄISCHE PATENTSCHRIFT

(11) **EP 2 696 111 B1**
(45) Veröffentlichungstag und Bekanntmachung des Hinweises auf die Patenterteilung: **04.03.2015**
(21) Anmeldenummer: 13178360.7
(22) Anmeldetag: 29.07.2013
(51) Int. Cl.: F16H 63/34

(54) **Aktuatoranordnung für einen Antriebsstrang**
Actuator for a drive train
Agencement d'actionneurs pour une chaîne cinématique

(30) Priorität: 09.08.2012 DE 102012016235
(43) Veröffentlichungstag der Anmeldung: 12.02.2014
(73) Patentinhaber: GETRAG Getriebe- und Zahnradfabrik Hermann Hagenmeyer GmbH & Cie KG, 74199 Untergruppenbach (DE)
(72) Erfinder: Rühle, Günter, 74369 Löchgau (DE); Rothvoss, Stefan, 71711 Steinheim (DE); Kiehlneker, Alexander, 74223 Flein (DE); Anzt, Christian, 71723 Grossbottwar (DE)
(74) Vertreter: Witte, Weller & Partner Patentanwälte mbB

(56) Entgegenhaltungen:
- EP-A1- 2 664 826
- EP-A2- 1 199 233
- WO-A1-2004/031623
- DE-A1-102008 007 016

## Beschreibung

Die vorliegende Erfindung betrifft eine Aktuatoranordnung für einen Antriebsstrang, mit einer elektromotorisch angetriebenen Aktuatorpumpe, mit einem Kupplungsaktuator, der zur Betätigung einer Reibkupplung des Antriebsstranges ausgebildet ist und der mit einem Druckanschluss der Aktuatorpumpe verbunden ist, und mit einem Parksperrenaktuator, der zur Betätigung einer Parksperrenanordnung des Antriebsstranges ausgebildet ist, wobei der Parksperrenaktuator eine Offenposition, in der die Parksperrenanordnung gelöst ist, und eine Schließposition aufweist, in der die Parksperrenanordnung geschlossen ist.

Ferner betrifft die vorliegende Erfindung einen Antriebsstrang für ein Kraftfahrzeug mit wenigstens einer Reibkupplung und einer Parksperrenanordnung sowie mit einer Aktuatoranordnung der oben genannten Art.

Automatisierte Antriebsstränge für Kraftfahrzeuge weisen typischerweise eine Parksperrenanordnung auf, die bspw. ein mit einer Getriebeausgangswelle verbundenes Klinkenrad aufweisen kann, in dessen Verzahnung eine mit dem Gehäuse verbundene Sperrklinke eingreifen kann, um eine Schließposition (Parksperrenposition) einzurichten.

Bei klassischen Wandlerautomatikgetrieben können derartige Parksperrenanordnungen manuell betätigt werden, bspw. über den Wählhebel und einen hiermit verbundenen Seilzug.

Ferner ist es bei Automatikgetrieben auch bekannt, die Parksperrenanordnung mittels eines hydraulischen Parksperrenaktuators zu betätigen. Dies trifft insbesondere auf Automatikgetriebe zu, bei denen Reibkupplungen oder andere Elemente hydraulisch betätigt werden. Eine Betätigung einer Parksperrenanordnung durch einen Parksperrenaktuator wird auch als "park by wire" bezeichnet.

Aktuatoranordnungen für Antriebsstränge, bei denen ein Kupplungsaktuator eine Reibkupplung betätigt, weisen häufig eine durch einen Verbrennungsmotor angetriebene Pumpe auf, die bei Betrieb des Verbrennungsmotors über ein Druckregelventil einen Leitungsdruck bereitstellt. Aus dem Leitungsdruck werden dann über elektromechanische Ventilanordnungen Drücke zum Ansteuern von Kupplungsaktuatoren und dergleichen abgeleitet. Durch die im Betrieb des Kraftfahrzeuges ständig laufende Pumpe ist der Wirkungsgrad derartiger Aktuatoranordnungen relativ niedrig.

Generell ist es jedoch auch bekannt, derartige Pumpen elektromotorisch anzutreiben. Ferner sind Aktuatoranordnungen für Reibkupplungen bekannt (bspw. EP 1 236 918 B1), bei denen eine Pumpe elektromotorisch angetrieben wird und bei denen ein Druckanschluss der Pumpe direkt, d.h. ohne Zwischenschaltung von Ventilen, mit einem Kupplungsaktuator verbunden ist. An der Verbindung ist ein Drucksensor angeordnet. Der von dem Kupplungsaktuator ausgeübte Druck kann bei einer derartigen Aktuatoranordnung durch Regeln der Drehzahl des die Pumpe antreibenden Elektromotors eingestellt werden. Der Vorteil derartiger Aktuatoranordnungen liegt auch darin, dass keine Proportionalventile oder dergleichen in dem Hydraulikkreis verwendet werden müssen, deren Montage erhöhte Anforderungen an die Reinheit stellt.

Aus dem Dokument DE 101 36 425 A1 ist eine hydraulische Aktuatoranordnung zur Betätigung einer Parksperre bekannt, bei der eine von einem Verbrennungsmotor angetriebene Pumpe verwendet wird, deren Druckanschluss mit einem Druckbegrenzungsventil verbunden ist.

Das Dokument DE 198 585 43 A1 zeigt einen weiteren Hydraulikkreis, mittels dessen sowohl Reibkupplungen bzw. Bremsen eines Wandler-Automatikgetriebes betätigbar sind. Der Hydraulikkreis weist ebenfalls Proportionalventile zur Einstellung eines Leitungsdruckes auf. Ferner ist vorgesehen, dass ein manuelles Betätigen eines Hebels ein Ventil umsteuert, welches automatisch einen Notgang für eine Vorwärtsfahrt einlegt und gleichzeitig eine Parksperre entriegelt.

Das Dokument DE 41 27 991 A1 offenbart einen weiteren Hydraulikkreis zum Betätigen einer Parksperrenanordnung, bei der eine Pumpe von einem Verbrennungsmotor angetrieben ist und ein Absperrventil einen Leitungsdruck erzeugt. Eine Arretierung der Parksperrenanordnung ist in diesem Dokument nicht offenbart.

Eine weitere Parksperren-Betätigungseinrichtung mit kombinierter Fahrstufenwähleinrichtung für ein Automatikgetriebe ist aus dem Dokument DE 102 45 386 A1 bekannt.

Das Dokument WO 2008/101459 A1 offenbart eine Hydraulikanordnung zur Ansteuerung eines Kegelscheibenumschlingungsgetriebes, wobei in dem Hydraulikkreis eine Ventilanordnung zum Steuern einer Parkbremse vorgesehen ist.

Schließlich offenbart das Dokument DE 100 52 261 A1 eine Steuereinrichtung für eine Parksperre eines Kraftfahrzeuges, bei der wenigstens zwei unabhängige auf den Stellantrieb einwirkende Ansteuermittel vorgesehen sind, um einen sicheren zuverlässigen Betrieb der Parksperre zu ermöglichen.

Aus dem Dokument DE 10 2006 022 963 A1 ist eine Parksperrenanordnung bekannt, bei der eine Parksperrenklinke in einer Offenposition und in einer Schließposition arretierbar ist.

Das Dokument DE 10 2011 105 068 A1 offenbart eine Parksperranordnung, deren Parksperrenkolben mittels eines Verriegelungselementes formschlüssig verriegelbar ist. Zur Entriegelung des Parksperrenkolbens ist zum einen ein elektromagnetischer Aktuator vorgesehen. Parallel hierzu weist eine Entriegelungseinheit einen hydraulischen und/oder pneumatischen Aktuator auf, der den Parksperrenkolben bei Ausfall des elektromagnetischen Aktuators entriegeln kann.

Das Dokument DE 10 2008 007 016 A1 betrifft eine Hydraulikanordnung zur Steuerung eines Kegelscheibenumschlingungsgetriebes. Die Hydraulikanordnung weist eine erste Ventilanordnung zur Steuerung eines Anpressdrucks des Kegelscheibenumschlingungsgetriebes, eine zweite Ventilanordnung zur Steuerung des Übersetzungsverhältnisses des Kegelscheibenumschlingungsgetriebes, und eine hydraulische Energiequelle zur Versorgung der Hydraulikanordnung mit hydraulischer Energie auf.

Aus dem Dokument WO 2004/031623 A1 ist eine Parksperrenbetätigungseinrichtung und eine Fahrstufenwähleinrichtung für ein Automatikgetriebe eines Kraftfahrzeugs bekannt.

Ferner beschreibt das Dokument EP 1 199 233 A2 eine Steuereinrichtung für die Parksperre eines Kraftfahrzeugs.

Vor diesem Hintergrund ist es eine Aufgabe der Erfindung, eine verbesserte Aktuatoranordnung für einen Antriebsstrang sowie einen mit einer solchen Aktuatoranordnung ausgestatteten Antriebsstrang anzugeben, wobei ein hoher Wirkungsgrad erzielt wird und/oder die Anzahl der Komponenten und damit der konstruktive Aufwand verringert wird.

Diese Aufgabe wird bei der eingangs genannten Aktuatoranordnung dadurch gelöst, dass der Parksperrenaktuator ebenfalls mit dem Druckanschluss der Aktuatorpumpe verbunden ist, wobei der Parksperrenaktuator mittels einer Arretiereinrichtung in der Offenposition und/oder in der Schließposition arretierbar ist.

Generell ist es denkbar, dass zwischen der Aktuatorpumpe und dem Kupplungsaktuator bzw. dem Parksperrenaktuator geeignete Ventile angeordnet sind, bei denen es sich vorzugsweise um Wegeventile handelt, die nicht proportional wirken. Hierdurch kann die Montage der Aktuatoranordnung bei geringeren Reinheitsanforderungen erfolgen.

Erfindungsgemäß sind jedoch der Kupplungsaktuator und der Parksperrenaktuator direkt mit dem Druckanschluss der Aktuatorpumpe verbunden.

Bei dieser Ausgestaltung kann die Aktuatoranordnung im Wesentlichen ohne Ventile realisiert werden.

Dabei versteht sich, dass der Druckanschluss vorzugsweise mit einem Drucksensor verbunden ist, um den Druck messen und durch Einstellen der Drehzahl der Aktuatorpumpe regeln zu können.

Bei der erfindungsgemäßen Aktuatoranordnung kann eine "park by wire"-Betätigung einer Parksperrenanordnung realisiert werden, wobei die Aktuatoranordnung mit wenigen Komponenten realisiert werden kann. Insbesondere ist es möglich, die Aktuatoranordnung ohne speziell für die Parksperrenanordnung vorgesehene Magnetventile zu realisieren. Insbesondere sind keine Proportionalventile in der Aktuatoranordnung notwendig.

Demzufolge können der Bauraum und die Kosten der Aktuatoranordnung klein gehalten werden.

Durch die Arretiereinrichtung kann in geeigneter Weise erreicht werden, dass trotz des parallelen Anschlusses des Kupplungsaktuators und des Parksperrenaktuators an den Druckanschluss der Aktuatorpumpe eine unbeabsichtigte Betätigung der Parksperrenanordnung vermieden werden kann.

Der Antriebsstrang kann einen Antriebsmotor in Form eines Verbrennungsmotors aufweisen. In diesem Fall ist durch eine geeignete Ansteuerung dafür zu sorgen, dass dann, wenn die Position der Parksperrenanordnung zu verändern ist, das Kraftfahrzeug nicht versehentlich anfährt. Zum einen kann dies dadurch erreicht werden, dass für diesen Fall Gangstufen in einem Stufengetriebe ausgelegt werden, das im Leistungsfluss hinter der Reibkupplung angeordnet ist. Alternativ oder zusätzlich hierzu kann dafür gesorgt werden, dass die Reibkupplung in einem anderen Druckbereich betätigt wird als die Parksperrenanordnung.

Von besonderem Vorzug ist es, wenn der Antriebsstrang als Antriebsmotor eine elektrische Maschine aufweist. Bei derartigen Antriebssträngen, wie sie in Elektrofahrzeugen oder auch in Hybrid-Fahrzeugen verwendet werden, kann ein Anfahren des Kraftfahrzeug mittels der elektrischen Maschine erfolgen. In diesem Fall kann unabhängig von dem Zustand von Gangstufen in einem nachgeschalteten Stufengetriebe die Reibkupplung im Stillstand des Fahrzeuges betätigt werden, also geschlossen werden, um auf diese Weise den Parksperrenaktuator zu betätigen, bspw. von einer Schließposition in eine Offenposition zu bewegen.

Ferner ist es insgesamt bevorzugt, wenn die Arretiereinrichtung dazu ausgelegt ist, die Parksperrenanordnung sowohl in der Offenposition als auch in der Schließposition zu arretieren. Die Parksperrenanordnung wird bei dieser Ausführungsform als "normally stay"-Parksperrenanordnung realisiert, so dass die Parksperre durch Hilfsenergie sowohl eingelegt - als auch ausgelegt werden muss.

Hierdurch wird erreicht, dass eine Betätigung der Parksperrenanordnung ausschließlich dann möglich ist, wenn die Arretiereinrichtung die Parksperrenanordnung freigibt.

In allen anderen Betriebszuständen, also wenn die Arretiereinrichtung die Parksperrenanordnung in der Offenposition oder in der Schließposition arretiert, kann der Kupplungsaktuator über die Aktuatorpumpe in beliebiger Weise angesteuert werden, ohne dass dies einen Einfluss auf die Parksperrenanordnung hat und/oder dass die Parksperrenaktuatorik die Reibkupplungsbetätigung beeinflusst.

Die Aufgabe wird somit vollkommen gelöst.

Gemäß einer besonders bevorzugten Ausführungsform weist der der Parksperrenaktuator einen mit der Parksperrenanordnung mechanisch verbundenen Parksperrenkolben auf, der in ebenfalls bevorzugter Art und Weise in Richtung der Schließposition vorgespannt ist.

Die Vorspannung kann mechanisch mittels einer Feder oder auch hydraulisch erfolgen.

Eine Parksperren-Kolben/Zylinderanordnung, die einen Parksperrenzylinder und den Parksperrenkolben aufweist, ist vorzugsweise als einfach wirkende Kolben-/Zylinderanordnung ausgebildet, weist also vorzugsweise nur einen Hydraulikanschluss auf, der mit dem Druckanschluss der Aktuatorpumpe verbunden ist.

Bei dieser Ausführungsform kann die Parksperrenanordnung durch geeignete Ansteuerung der Aktuatorpumpe gegen die Vorspannung des Parksperrenkolbens geöffnet werden.

Der Druckanschluss der Aktuatorpumpe ist vorzugsweise über eine Blende mit einem drucklosen Abschnitt wie einem Tank verbunden. Demzufolge kann bei nicht angesteuerter Aktuatorpumpe die Vorspannung den Parksperrenkolben in die Schließposition drücken.

Gemäß einer weiteren bevorzugten Ausführungsform ist der Parksperrenkolben Bestandteil einer Parksperren-Kolben/Zylinderanordnung, wobei die Vorspanneinrichtung zum Vorspannen des Parksperrenkolbens in die Schließposition an einem Abschnitt des Parksperrenkolbens angreift, der außerhalb eines Parksperrenzylinders der Parksperren-Kolben/Zylinderanordnung angeordnet ist.

Durch die Anordnung der Vorspanneinrichtung außerhalb des Parksperrenzylinders kann der Parksperrenkolben insbesondere in der Offenposition eine definierte Lage in Bezug auf den Parksperrenzylinder einnehmen, insbesondere an einer Endwand des Parksperrenzylinders anschlagen.

Hierdurch kann erreicht werden, dass ein Volumen des Parksperrenzylinders in der Offenposition konstant bleibt. Folglich kann die Ansteuerung der Reibkupplung störungsfrei erfolgen. Wenn eine mechanische Vorspannfeder in dem Parksperrenzylinder angeordnet wird, ist es ggf. schwieriger, das Volumen des Parksperrenzylinders in der Offenposition konstant zu halten. Auch in diesem Fall ist es jedoch denkbar, eine definierte Anschlagposition zwischen dem Parksperrenkolben und dem Parksperrenzylinder in der Offenposition der Parksperrenanordnung einzurichten, um das Volumen des Parksperrenzylinders konstant zu halten.

Gemäß einer weiteren bevorzugten Ausführungsform greift die Arretiereinrichtung an einem Arretiervorsprung an, der mit einem Parksperrenkolben oder einem Parksperrenglied der Parksperrenanordnung verbunden ist.

Das Parksperrenglied kann bspw. eine Parksperrenklinke sein.

Bevorzugt ist es jedoch, wenn der Arretiervorsprung mit einem Parksperrenkolben verbunden ist. Hierdurch kann die Arretierung direkt an den Parksperrenkolben wirken und folglich die Position des Parksperrenkolbens in der Offen- und/oder in der Schließposition definiert festlegen. Hierdurch kann ebenfalls verhindert werden, dass sich während einer Betätigung der Reibkupplung Volumenänderungen in dem Parksperrenzylinder ergeben, insbesondere in der Offenposition.

Gemäß einer weiteren insgesamt bevorzugten Ausführungsform weist die Arretiereinrichtung eine Arretierposition und eine Freigabeposition auf, wobei die Arretiereinrichtung in die Arretierposition vorgespannt ist.

Bei dieser Variante kann die Parksperrenanordnung in der Offen- und/oder in der Schließposition, insbesondere aber in beiden Positionen als "normally stay"-Anordnung realisiert werden. Mit anderen Worten ist es zum Wechseln von Offenposition und Schließposition jeweils notwendig, die Arretiereinrichtung mittels Hilfsenergie in die Freigabeposition zu bewegen, und zwar gegen die Vorspannung der Arretiereinrichtung.

Die Arretiereinrichtung kann auf verschiedene Art und Weise betätigt werden.

Gemäß einer bevorzugten Variante wird die Arretiereinrichtung mittels eines Elektromagnetaktuators betätigt.

Hierdurch ergibt sich eine baulich sehr einfache Variante.

Gemäß einer weiteren Ausführungsform weist der Antriebsstrang eine weitere Reibkupplung auf, die mittels eines weiteren Kupplungsaktuators betätigbar ist, der mit dem Druckanschluss einer weiteren Aktuatorpumpe verbunden ist, wobei die Arretiereinrichtung mittels der weiteren Aktuatorpumpe betätigbar ist.

In einer Variante kann die Arretiereinrichtung dabei mit einem Sauganschluss der weiteren Aktuatorpumpe verbunden sein. In diesem Fall kann die Arretiereinrichtung dann in die Freigabeposition bewegt werden, wenn die weitere Reibkupplung geöffnet wird. Dies bedingt, dass die weitere Aktuatorpumpe bidirektional antreibbar ist, insbesondere mittels eines Elektromotors.

In einer alternativen Variante ist die Arretiereinrichtung mit dem Druckanschluss der weiteren Aktuatorpumpe verbunden. In diesem Fall kann ein Überführen der Arretiereinrichtung in die Freigabeposition in der Regel dann erfolgen, wenn die weitere Reibkupplung geschlossen ist.

Bei Antriebssträngen mit Verbrennungsmotor ist dabei darauf zu achten, dass in dem Stufengetriebe (z.B. dem zugeordneten Teilgetriebe) keine Gangstufe eingelegt ist. Bei Antriebssträngen mit einer elektrischen Maschine als Antriebsmotor kann das Schließen der Kupplung den Vorteil haben, dass eine Betätigung der Parksperrenanordnung nur dann möglich ist, wenn die weitere Reibkupplung geschlossen ist.

In einer weiteren Ausbildung ist es von Vorteil, wenn eine Arretier-Kolben/Zylinderanordnung mit dem Druckanschluss der weiteren Aktuatorpumpe verbunden ist, wobei die Arretier-Kolben/Zylinderanordnung in eine Arretierposition vorgespannt ist, wobei die Vorspannung so gewählt ist, dass zum Bewegen der Arretier-Kolben/Zylinderanordnung in eine Freigabeposition ein Freigabedruck an die Arretier-Kolben/Zylinderanordnung anzulegen ist, der größer ist als ein maximaler Arbeitsdruck zum Betätigen der weiteren Reibkupplung.

Bei dieser Ausführungsform kann die weitere Reibkupplung durch Regeln des Druckes am Druckanschluss der weiteren Aktuatorpumpe über den gesamten Stellbereich betätigt werden, ohne dass die Arretiereinrichtung von der Arretierposition in die Freigabeposition bewegt wird. Lediglich dann, wenn die weitere Reibkupplung "überdrückt" wird, wird die Arretiereinrichtung von der Arretierposition in die Freigabeposition überführt.

Gemäß einer weiteren bevorzugten Ausführungsform, die einen weiteren Aspekt der Erfindung darstellt, ist der Parksperrenaktuator mittels einer Arretiereinrichtung in einer Offenposition und/oder in einer Schließposition arretierbar, wobei die Arretiereinrichtung mittels einer Kühlungs-Druckquelle betätigbar ist, die zur Kühlung wenigstens einer Komponente des Antriebsstranges ausgebildet ist.

In solchen Fällen, bei denen die Reibkupplung und/oder die weitere Reibkupplung als nasslaufende Reibkupplungen ausgebildet ist bzw. sind, beinhaltet eine derartige Kupplungsanordnung in der Regel immer auch eine Kühlanordnung. Von der Kühlanordnung wird Kühlöl bereitgestellt, das vorzugsweise nach der Art einer Einspritzschmierung radial zu einer Nabe der Reibkupplung(en) zugeführt wird, von wo es radial nach außen in die Reibkupplungen geschleudert wird, um die dort insbesondere bei Schlupfbetrieb anfallende Wärme effizient abtransportieren zu können.

Derartige Kühlungsanordnungen werden jedoch auch alternativ oder zusätzlich zur Kühlung von Antriebsmotoren verwendet, bspw. zur Kühlung einer elektrischen Antriebsmaschine.

Der Grundgedanke gemäß diesem weiteren Aspekt liegt folglich darin, eine hierzu vorgesehene Kühlungs-Druckquelle zusätzlich dazu zu verwenden, um die Arretiereinrichtung zu betätigen.

Hierdurch kann der Bauteilaufwand weiter verringert werden.

Gemäß einer hierbei bevorzugten Ausführungsform weist die Kühlungs-Druckquelle eine elektromotorisch bidirektional angetriebene Kühlungs-Pumpe auf, deren Druckanschluss mit der zu kühlenden Komponente verbunden ist und deren Sauganschluss mit einer Arretier-Kolben/Zylinderanordnung der Arretiereinrichtung verbunden ist.

Zum Versetzen der Arretiereinrichtung von einer Arretier- in eine Freigabeposition wird die Drehrichtung der Kühlungs-Pumpe so eingestellt, dass Fluid in die Arretier-Kolben/Zylinderanordnung gefördert werden kann. Da das Wechseln der Position der Parksperrenanordnung in der Regel vorzugsweise bei Stillstand des Fahrzeugs erfolgt, ist in dieser Phase eine aktive Kühlung der Reibkupplung(en) nicht notwendig, so dass die Kühlungs-Pumpe ohne funktionale Einschränkungen zur Betätigung der Arretiereinrichtung verwendbar ist.

Die Arretier-Kolben/Zylinderanordnung ist vorzugsweise eine einfach wirkende Anordnung und ist vorzugsweise mittels eines Energiespeichers in eine Arretierposition vorgespannt. Um ein sicheres Entleeren der Arretier-Kolben/Zylinderanordnung zu gewährleisten, kann es vorteilhaft sein, kurzfristig die Drehrichtung der Kühlungs-Pumpe umzukehren, um Kühlöl hin zu der zu kühlenden Komponente zu fördern. Altemativ hierzu kann eine innere Leckage der Kühlungs-Pumpe genutzt werden und der Elektromotor zum Antrieb der Kühlungs-Pumpe stückweise zurückgedreht werden, so dass die Zufuhr von Kühlfluid zu der zu kühlenden Komponente im Wesentlichen nicht stattfindet. Hierdurch kann der Wirkungsgrad der Anordnung insgesamt verbessert werden.

Bei der vorliegenden Erfindung ist der der Parksperrenaktuator mit dem Druckanschluss der Aktuatorpumpe verbunden.

Bei einer Aktuatoranordnung, bei der die Kühlungs-Druckquelle zur Betätigung der Arretiereinrichtung ausgebildet ist, ist es in einer Variante möglich, den Parksperrenaktuator mit dem Sauganschluss der Aktuatorpumpe zu verbinden.

Hierbei wird zur Betätigung des Parksperrenaktuators die Drehrichtung der in diesem Fall bidirektional angetriebenen Aktuatorpumpe umgekehrt.

In allen oben beschriebenen Fällen, bei denen die Arretiereinrichtung nicht mittels der Kühlungs-Druckquelle betätigt wird, kann die Kühlungs-Druckquelle ebenfalls eine elektromotorisch angetriebene Kühlungs-Pumpe aufweisen, die in diesem Fall jedoch monodirektional ausgebildet sein kann. Hierdurch kann für die Kühlungs-Druckquelle insgesamt eine relativ kleine, leichte Kühlungs-Pumpe hinreichend sein. In manchen Varianten ist dabei zusätzlich zu einer Kühlungs-Pumpe, die zur Kühlung der Reibkupplung(en) ausgelegt ist, eine weitere Kühlungs-Pumpe vorgesehen, die zur Kühlung eines Antriebsmotors ausgebildet ist.

In diesem Fall kann die Betätigung der Arretiereinrichtung auch mittels der weiteren Kühlungs-Pumpe erfolgen, die in diesem Fall vorzugsweise als elektromotorisch bidirektional angetriebene Pumpe ausgebildet ist.

In diesem Fall ist es möglich, die Arretiereinrichtung unabhängig von der Kühlung der Reibkupplung(en) und/oder unabhängig von der Betätigung der Reibkupplung(en) zu betätigen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges eines Kraftfahrzeuges mit einer ersten Ausführungsform einer erfindungsgemäßen Aktuatoranordnung;
- Fig. 2: eine schematische Darstellung einer weiteren Ausführungsform einer erfindungsgemäßen Aktuatoranordnung;
- Fig. 3: eine schematische Ansicht einer weiteren Ausführungsform einer erfindungsgemäßen Aktuatoranordnung;
- Fig. 4: eine schematische Ansicht einer erfindungsgemäßen Aktuatoranordnung; und
- Fig. 5: eine schematische Darstellung einer weiteren Ausführungsform eines erfindungsgemäßen Antriebsstranges mit einer erfindungsgemäßen Aktuatoranordnung.

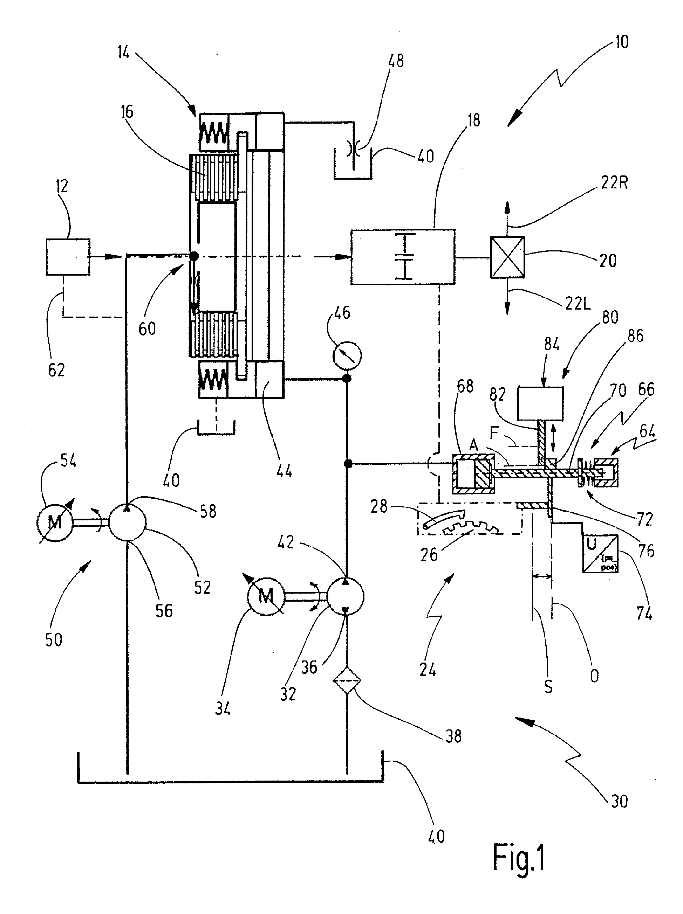

In Fig. 1 ist eine erste Ausführungsform eines Antriebstranges für ein Kraftfahrzeug dargestellt und generell mit 10 bezeichnet. Der Antriebsstrang 10 weist einen Antriebsmotor 12 auf, der als Verbrennungsmotor oder als Elektromotor oder als Hybrid-Antriebsmotor ausgebildet sein kann. Ferner weist der Antriebsstrang 10 eine Reibkupplungsanordnung 14 auf, die vorliegend eine Reibkupplung 16 beinhaltet. Ein Eingangsglied der Reibkupplung 16 ist mit dem Antriebsmotor 12 verbunden. Ein Ausgang der Reibkupplung 16 ist mit einem Getriebe 18 verbunden, das bspw. als Stufengetriebe in Vorgelegebauweise ausgeführt sein kann. Ein Ausgang des Getriebes 18 ist mit einem Differential 20 verbunden, mittels dessen Antriebsleistung auf angetriebene Räder 22L, 22R verteilt werden kann.

Die Reibkupplung 16 ist als nasslaufende Lamellenkupplung ausgeführt. Sie kann als Anfahr- und Trennkupplung zwischen Antriebsmotor 12 und Getriebe 18 angeordnet sein. Bei einem Doppelkupplungsgetriebe kann die Reibkupplungsanordnung 14 auch zwei derartige Reibkupplungen aufweisen, die in an sich bekannter Weise mit zwei Eingangswellen eines Doppelkupplungsgetriebes verbunden sind.

Ferner kann die Reibkupplung 16 Teil eines rein elektrischen Antriebsstranges sein, wobei bspw. zwei Reibkupplungen vorgesehen sind, mittels derer ein auf zwei Gangstufen beschränktes Getriebe gebildet werden kann. In diesem Fall sind die zwei Reibkupplungen als Lastschaltkupplungen ausgebildet.

Der Antriebsstrang 10 weist ferner eine Parksperrenanordnung 24 auf, die bspw. in das Getriebe 18 integriert sein kann, wie es durch eine gestrichelte Linie dargestellt ist. Die Parksperrenanordnung 24 kann verschiedene Bauformen annehmen. Häufig beinhalten derartige Parksperrenanordnungen 24 ein Parksperrenrad 26, das bspw. mit einer Getriebeausgangswelle verbunden ist, sowie eine Parksperrenklinke 28, die an einem Gehäuse des Getriebes 18 verschwenkbar festgelegt ist. In einer Offenposition der Parksperrenanordnung 24 gibt die Parksperrenklinke 28 das Parksperrenrad 26 frei. In einer Schließposition (Parksperrenposition) der Parksperrenanordnung 24 greift die Parksperrenklinke 28 in das Parksperrenrad 26 ein, so dass ein ungewolltes Wegrollen des Fahrzeugs verhindert werden kann, das mit einem derartigen Antriebsstrang 10 ausgestattet ist.

Der Antriebsstrang 10 weist ferner eine Aktuatoranordnung 30 auf. Die Aktuatoranordnung 30 weist einen Hydraulikabschnitt auf und kann ggf. auch elektromechanische Komponenten beinhalten wie Elektromagnete, elektrische Stellantriebe etc.

Zur Betätigung der Reibkupplung 16 beinhaltet die Aktuatoranordnung 30 eine Aktuatorpumpe 32, die mittels eines Elektromotors 34 bidirektional antreibbar ist. Die Aktuatorpumpe 32 weist einen Sauganschluss 36 auf, der, optional über ein Filter 38, mit einem Tank 40 für Hydraulikfluid verbunden ist. Das Hydraulikfluid kann bspw. ein ATF-Öl sein.

Ferner beinhaltet die Aktuatorpumpe 32 einen Druckanschluss 42, der direkt mit einem Kupplungsaktuator 44 verbunden ist. Der Kupplungsaktuator 44 kann bspw. eine einfach wirkende Kolben/Zylinder-Anordnung aufweisen, die dazu ausgelegt ist, ein Lamellenpaket der Reibkupplung 16 anzudrücken, um auf diese Weise die Reibkupplung in einen Schlupfzustand zu bringen oder zu schließen.

Die Reibkupplung 16 kann eine nicht näher bezeichnete Rückstellfeder beinhalten, mittels der die Reibkupplung 16 in eine geöffnete Position vorgespannt ist (sog. "normally open"-Kupplung).

An eine Fluidleitung, die den Druckanschluss 42 und den Kupplungsaktuator 44 miteinander verbindet, ist ein Drucksensor 46 angeschlossen. Ferner ist der Kupplungsaktuator 44 (und/oder die den Druckanschluss 42 und den Kupplungsaktuator 44 verbindende Leitung) über eine Blende 48 mit dem Tank 40 verbunden. Die Reibkupplung 16 kann hierbei geregelt geschlossen werden, derart, dass sie dazu angesteuert wird, ein bestimmtes Drehmoment und/oder eine bestimmte Leistung zu übertragen. Hierzu wird der Elektromotor 34 angesteuert, um die Aktuatorpumpe 32 anzutreiben. Durch den hierdurch am Druckanschluss 42 bereitgestellten Volumenstrom, stellt sich in dem Kupplungsaktuator 44 ein Druck ein, der mittels des Drucksensors 46 messbar ist. Der gemessene Druck kann über eine nicht näher bezeichnete Steuereinrichtung rückgekoppelt werden, um auf diese Weise den Druck durch Einstellen der Drehzahl des Elektromotors 34 zu regeln.

Die Blende 48 sorgt dafür, dass ein kleiner Volumenstrom zum Tank 40 hin abfließt, wodurch sich die Regelbarkeit des Druckes verbessern lässt.

Die Aktuatoranordnung 30 weist ferner eine Kühlungs-Druckquelle 50 auf, mittels der Kühlfluid der Reibkupplung 16 zugeführt wird. Vorliegend ist das Kühlfluid das gleiche Fluid, das auch für die Aktuatorik verwendet wird. Die Kühlungs-Druckquelle 50 weist eine Kühlungs-Pumpe 52 auf, die mittels eines weiteren Elektromotors 54 antreibbar ist. Die Kühlungs-Pumpe 52 ist vorliegend als vergleichsweise klein dimensionierte monodirektional ansteuerbare Pumpe ausgeführt. Ein Sauganschluss 56 ist, ggf. über ein Fluidfilter, mit dem Tank 40 verbunden. Ein Druckanschluss 58 der Kühlungs-Pumpe 52 ist mit einer Kupplungskühlung 60 verbunden, die bspw. eine radial innerhalb der Reibkupplung 16 angeordnete Nabe aufweist, über die das Kühlfluid zugeführt wird. Von der Nabe wird das Kühlfluid im Betrieb durch Fliehkräfte radial nach außen geschleudert und dem Lamellenpaket zugeführt. Insbesondere im Schlupfbetrieb kann hierbei in dem Lamellenpaket entstehende Wärme effizient mittels des Kühlfluides abgeführt werden. Das Kühlfluid tropft dann, bspw. über Gehäusewände der Reibkupplung 16, zurück in den Tank 40, wie es in Fig. 1 schematisch angedeutet ist.

Der Antriebsmotor 12 kann ebenfalls über eine Motorkühlung verfügen, wie es in Fig. 1 schematisch bei 62 angedeutet ist. Der Antriebsmotor 12 kann bspw. eine elektrische Maschine sein. In diesem Fall kann die Kühlung mittels des gleichen Fluides erfolgen wie die Kühlung der Reibkupplung 16. Hierbei kann die Motorkühlung 62 auch an den Druckanschluss 58 der Kühlungs-Pumpe 52 angeschlossen werden, wie es in Fig. 1 schematisch angedeutet ist.

Alternativ hierzu kann für die Motorkühlung 62 eine weitere Kühlungspumpe vorgesehen sein, die mittels eines weiteren Elektromotors antreibbar ist und deren Sauganschluss mit dem Tank 40 und deren Druckanschluss mit der Motorkühlung 62 verbunden ist.

Die Aktuatoranordnung 30 weist ferner einen Parksperrenaktuator 64 auf. Der Parksperrenaktuator 64 beinhaltet eine Parksperren-Kolben/Zylinderanordnung 66, die als einfach wirkende Kolben/Zylinderanordnung ausgebildet ist. Die ParksperrenKolben/Zylinderanordnung 66 beinhaltet hierbei einen Parksperrenzylinder 68 und einen Parksperrenkolben 70. Der Parksperrenkolben 70 ist mittels einer außerhalb des Parksperrenzylinders 68 vorgesehenen Vorspanneinrichtung 72 in eine Schließposition S vorgespannt. Durch Befüllen des Parksperrenzylinders 68 lässt sich der Parksperrenkolben 70 gegen die Wirkung der Vorspanneinrichtung 72 von der Schließposition S in eine Offenposition O bewegen. Zur Überprüfung der aktuellen Lage des Parksperrenkolbens 70 kann ein Lagesensor 74 vorgesehen sein.

Der Parksperrenkolben 70 ist über eine schematisch angedeutete mechanische Kopplung 76 mit der Parksperrenanordnung 24 gekoppelt. Beispielsweise kann der Parksperrenkolben nach der Art eines Ziehkeiles ausgebildet sein, der zwischen der Parksperrenklinke 28 und einer Gehäusewand des Getriebes 18 angeordnet ist.

Eine derartige Parksperrenanordnung ist dem Grunde nach in dem Dokument DE 10 2006 022 963 A1 beschrieben, auf deren Offenbarungsgehalt vorliegend vollumfänglich Bezug genommen wird.

Die Parksperren-Kolben/Zylinderanordnung 66 ist vorliegend direkt, also insbesondere ohne Zwischenschaltung von Proportionalventilen und vorzugsweise ohne Zwischenschaltung von Wegeventilen oder dergleichen, mit dem Druckanschluss 42 der Aktuatorpumpe 32 verbunden. Wenn an dem Druckanschluss 42 ein hinreichender Druck aufgebaut wird, kann der Parksperrenkolben 70 folglich gegen die Kraft der Vorspanneinrichtung 72 von der Schließposition S in die Offenposition O bewegt werden. Dieser Zustand ist in Fig. 1 dargestellt. Mit anderen Worten zeigt Fig. 1 die Parksperrenanordnung 24 in der Offenposition O.

Da der Druckanschluss 42 auch dazu verwendet wird, um die Reibkupplung 16 zu betätigen, d.h. zu schließen oder sich öffnen zu lassen, oder auch aktiv zu öffnen (durch Umkehren der Drehrichtung der Aktuatorpumpe 32), beinhaltet die Aktuatoranordnung 30 ferner eine Arretiereinrichtung 80. Die Arretiereinrichtung 80 ist dazu ausgelegt, die Parksperrenanordnung 24 in der Offenposition O und vorzugsweise auch in der Schließposition S mechanisch zu arretieren.

Die Arretiereinrichtung 80 kann dabei an einem Glied der Parksperrenanordnung 24 angreifen, bspw. an der Parksperrenklinke 28. Von besonderem Vorzug ist es jedoch, wenn, wie in Fig. 1 dargestellt, die Arretiereinrichtung 80 ein Arretierglied 82 aufweist, das an dem Parksperrenkolben 70 angreift.

Das Arretierglied 82 ist mittels eines Arretieraktuators 84 zwischen einer Arretierposition A (wie in Fig. 1 dargestellt) und einer Freigabeposition F bewegbar. Der Arretieraktuator 84 kann dabei eine elektromechanische Komponente sein, wie bspw. ein Elektromagnet. Bevorzugt ist es, wenn die Arretiereinrichtung 80 in die Arretierposition A mechanisch vorgespannt ist, bspw. mittels einer in Fig. 1 nicht näher dargestellten Feder.

Vorliegend ist an dem Parksperrenkolben 70 ein Arretiervorsprung 86 ausgebildet. In der in Fig. 1 gezeigten Offenposition O hintergreift das Arretierglied 82 den Arretiervorsprung 86, derart, dass der Parksperrenkolben 70 sich nicht in die Schließposition bewegen lässt. Der Parksperrenkolben 70 befindet sich dabei in Bezug auf den Parksperrenzylinder 68 vorzugsweise in einer Anschlagposition, derart, dass das Volumen des Parksperrenzylinders 68 konstant bleibt. Hierdurch kann die Betätigung der Reibkupplung 16 im Wesentlichen unbeeinflusst von der Parksperren-Kolben/Zylinderanordnung 66 erfolgen.

Wenn der Arretieraktuator 84 mit Hilfsenergie versorgt wird, um das Arretierglied 82 von der Arretierposition A in die Freigabeposition F zu versetzen, lässt sich der Parksperrenkolben 70 unabhängig von der Arretiereinrichtung 80 frei bewegen. Zum Schließen der Parksperrenanordnung drückt die Vorspanneinrichtung 72 den Parksperrenkolben 70 in Richtung der Schließposition S. Dabei findet ein Druckabbau in dem Parksperrenzylinder 68 über die Blende 48 statt. Dieser Vorgang kann ggf. durch Umkehrung der Drehrichtung der Aktuatorpumpe 32 unterstützt werden. Alternativ hierzu kann eine interne Leckage der Aktuatorpumpe 32 genutzt werden, wobei der Elektromotor 34 ggf. etwas zurückgedreht wird.

Sobald die Parksperren-Kolben/Zylinderanordnung 66 die Schließposition S erreicht hat, wird die Zufuhr von Hilfsenergie zu dem Arretieraktuator 84 unterbrochen. In diesem Fall versetzt die oben beschriebene mechanische Vorspannung das Arretierglied 82 zurück in die Arretierposition A, wobei das Arretierglied 82 hierbei den Arretiervorsprung 86 vorzugsweise von der gegenüberliegenden Seite hintergreift, in Richtung der axialen Erstreckung des Parksperrenkolbens 70 gesehen.

Durch diese Maßnahme wird die Parksperrenanordnung 24 in die Schließposition verbracht, also bspw. die Parksperrenklinke 28 in das Parksperrenrad 26 eingeführt. Zwischen der mechanischen Kopplung 76 und der Parksperrenklinke 28 kann dabei noch eine Federanordnung vorgesehen sein, die dafür sorgt, dass ein sicheres Einrasten der Parksperrenklinke 28 auch dann möglich ist, wenn die Parksperrenklinke 28 in der aktuellen Relativposition über einem Zahn einer Außenverzahnung des Parksperrenrades 26 angeordnet ist, wie es bspw. auch in dem oben beschriebenen Dokument DE 10 2006 022 963 A1 beschrieben ist.

Durch die Arretierung der Parksperrenanordnung 24 in der Schließposition wird die Relativlage zwischen Parksperrenzylinder 68 und Parksperrenkolben 70 wiederum fixiert, wodurch das Volumen des Parksperrenzylinders 68 konstant gehalten wird. Hierbei kann die Reibkupplung 16 unbeeinflusst von der Parksperrenanordnung 24 betätigt werden.

Die Parksperrenanordnung 24 ist aufgrund der sowohl in der Offen- als auch in der Schließposition wirkenden Arretiereinrichtung als "normally stay"-Parksperrenanordnung ausgeführt. Mit anderen Worten ist es zum Wechsel der Position der Parksperrenanordnung erforderlich, Hilfsenergie zuzuführen.

Um einen Notbetrieb einzurichten, bspw. bei Ausfall einer elektrischen Energieversorgung, kann die Parksperrenanordnung 24 mit einer Notentriegelung gekoppelt sein, die in Fig. 1 aus Gründen einer übersichtlicheren Darstellung jedoch nicht gezeigt ist.

Zum Versetzen der Parksperrenanordnung 24 in die Offenposition O ist zudem die unabhängige Ansteuerung von zwei Komponenten erforderlich, nämlich zum einen die Ansteuerung des Elektromotors 34 und zum anderen die Ansteuerung des Arretieraktuators 84. Hierdurch ergibt sich eine Redundanz und folglich eine erhöhte Sicherheit beim Lösen der Parksperreneinrichtung aus der Schließposition S.

Auch zum Versetzen der Parksperrenanordnung von der Offenposition in die Schließposition ist in jedem Fall ein Ansteuern des Arretieraktuators 84 erforderlich. Gegebenenfalls ist das Entleeren des Parksperrenzylinders 68 durch eine geeignete Ansteuerung des Elektromotors 34 zu unterstützen. Auch hierbei wird ein ungewolltes Betätigen der Parksperrenanordnung signifikant reduziert. Zum Einrichten dieser Funktionalität ist lediglich eine Parksperren-Kolben/Zylinderanordnung 66 sowie eine Arretiereinrichtung 80 vorzusehen. Die übrigen Komponenten, wie die Aktuatorpumpe 32 mit dem Elektromotor 34 sind in der Aktuatoranordnung 30 ohnehin vorhanden, so dass die Betätigung der Parksperrenanordnung 24 mit wenigen zusätzlichen Komponenten realisiert werden kann, was sowohl hinsichtlich Kosten, hinsichtlich Bauraum, und hinsichtlich Montageaufwand vorteilhaft ist.

Da die Betätigung der Parksperrenanordnung 24 von der Offen- in die Schließposition und umgekehrt über den Druckanschluss 42 erfolgt, mit dem auch die Reibkupplung 16 angesteuert wird, wird vorzugsweise durch eine geeignete Ablaufsteuerung dafür gesorgt, dass die Betätigung der Parksperrenanordnung in Koordination mit der Betätigung anderer Komponenten erfolgt.

Da das Ändern der Position der Parksperrenanordnung 24 in der Regel bei Stillstand oder bei sehr geringen Geschwindigkeiten des Kraftfahrzeuges erfolgt, kann eine derartige Ablaufsteuerung vergleichsweise einfach eingerichtet werden. Bei Verwendung eines Verbrennungsmotors als Antriebsmotor 12 kann hierbei ggf. vorgesehen sein, Gangstufen des Getriebes 18 auszulegen, bevor die Parksperrenanordnung betätigt wird.

Bei Verwendung eines Elektromotors als Antriebsmotor 12 erfolgt ein Anfahren in der Regel ohnehin mittels des Elektromotors, so dass die Kupplung 16 im Stillstand geschlossen werden kann. Insbesondere dann, wenn ein Antriebsstrang ein Zwei-Gang-Lastschaltgetriebe beinhaltet, das zwei Reibkupplungen aufweist, die zwei unterschiedliche Gangstufen ein- und auslegen, verbindet das Schließen von einer der Kupplungen den Abtrieb des Kraftfahrzeuges mit dem Elektromotor, so dass bspw. eine Abstützung von Drehmoment durch den Elektromotor erfolgen kann, wenn die Parksperre bspw. an einer Steigung ein- oder ausgelegt wird.

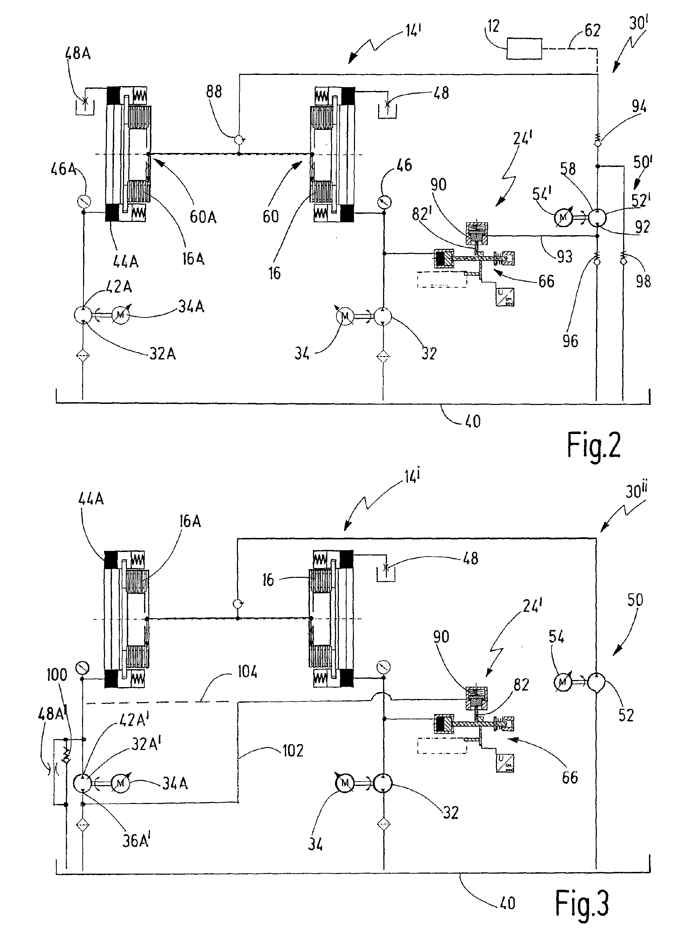

In den nachfolgenden Figuren 2 bis 4 sind weitere Ausführungsformen von Aktuatoranordnungen gezeigt, die hinsichtlich Aufbau und Funktionsweise generell der Aktuatoranordnung 30 der Fig. 1 entsprechen. Gleiche Elemente sind daher durch gleiche Bezugszeichen gekennzeichnet. Im Folgenden werden im Wesentlichen die Unterschiede erläutert.

In den nachfolgenden Figuren 2 bis 3 weist der Antriebsstrang jeweils eine weitere Reibkupplung 16A auf. Die weitere Reibkupplung 16A wird mittels eines weiteren Kupplungsaktuators 44A betätigt. Der weitere Kupplungsaktuator 44A ist jeweils mit dem Druckanschluss 42A einer weiteren Aktuatorpumpe 32A verbunden, die mittels eines weiteren Elektromotors 34A bidirektional angetrieben ist. Der Sauganschluss der weiteren Aktuatorpumpe 32A ist mit dem Tank 40 verbunden. Ferner wird die weitere Reibkupplung 16A mittels einer weiteren Kupplungskühlung 60A gekühlt, die gemeinsam mit der Kupplungskühlung 60A der ersten Reibkupplung 16 an eine Drehdurchführung 88 angeschlossen sein kann.

Fig. 2 zeigt eine Aktuatoranordnung 30', bei der die Kupplungskühlung 60 der Reibkupplung 16 und die Kupplungskühlung 60A der weiteren Reibkupplung 16A von einer Kühlungs-Druckquelle 50' versorgt werden, die im vorliegenden Fall eine Kühlungs-Pumpe 52' aufweist, die mittels eines Elektromotors 54' bidirektional antreibbar ist. Ein Druckanschluss 58 der Kühlungs-Pumpe 52' ist mit der Drehdurchführung 88 bzw. den Kupplungskühlungen 60, 60A verbunden. Ferner ist ein Sauganschluss 92 (entsprechend dem Sauganschluss 56) über eine Verbindungsleitung 93 mit einer Arretier-Kolben/Zylinderanordnung 90 verbunden. Die Arretier-Kolben/Zylinderanordnung 90 ist eine einfach wirkende Kolben/Zylinderanordnung mit einer mechanischen Vorspannfeder, die das Arretierglied 82' in die Arretierposition A vorspannt. Der Druckanschluss 58 der Kühlungs-Pumpe 52' ist dabei im vorliegenden Fall über ein erstes Rückschlagventil 94 mit der Drehdurchführung 88 bzw. den Kupplungskühlungen 60, 60A verbunden. Ferner ist der Sauganschluss 92 über ein zweites Rückschlagventil 96 mit dem Tank 40 verbunden. Schließlich ist der Druckanschluss 58 über ein drittes Rückschlagventil 98 mit dem Tank 40 verbunden.

Wenn die Kühlungs-Druckquelle 50' zum Kühlen der Reibkupplungen 16, 16A verwendet wird, wird die Kühlungs-Pumpe 52' in einer Richtung angetrieben, bei der Fluid aus dem Tank 40 über das zweite Rückschlagventil 96 angesaugt und durch das erste Rückschlagventil 94 hin zu den Reibkupplungen 16, 16A gefördert wird. Das dritte Rückschlagventil 98 ist in diesem Fall geschlossen.

Wenn die Kühlungs-Druckquelle 50' zum Ansteuern der Arretier-Kolben/Zylinderanordnung 90 verwendet wird, wird die Drehrichtung umgekehrt. In diesem Fall wird über das dritte Rückschlagventil 98 Fluid aus dem Tank 40 angesaugt. Das erste Rückschlagventil 94 ist dabei vorzugsweise geschlossen. Ferner ist das zweite Rückschlagventil 96 geschlossen, derart, dass das angesaugte Fluid über die Leitung 93 in die Arretier-Kolben/Zylinderanordnung 90 geleitet wird, wobei es einen mit dem Arretierglied 82' verbundenen Kolben der Arretier-Kolben/Zylinderanordnung 90 gegen die Kraft der mechanischen Vorspannfeder aus der Arretierposition A in die Freigabeposition F bewegt. Zum Zurückbewegen des Arretiergliedes 82' in die Arretierposition A kann im einfachsten Fall die Kühlungs-Pumpe 52' angehalten werden. Um das Entleeren der Arretier-Kolben/Zylinderanordnung 90 zu unterstützen, kann die Kühlungs-Pumpe 52' jedoch auch in die Kühlungsrichtung zurückgedreht werden, wobei eine interne Leckage der Kühlungs-Pumpe 52' genutzt wird. Alternativ kann die Kühlungs-Pumpe 52' auch wieder in die andere Richtung angetrieben werden, in der Fluid zu den Reibkupplungen 16, 16A geleitet wird.

Im Fall der Fig. 2 wird folglich die ohnehin vorhandene Kühlungs-Druckquelle 50' dazu verwendet, um die Arretiereinrichtung 80 zu betätigen. Ein weiterer separater Aktuator wie ein Elektromagnetaktuator ist dabei nicht erforderlich. Demzufolge kann die Aktuatoranordnung 30' mit wenigen Bauteilen realisiert werden.

In Fig. 3 ist eine weitere Aktuatoranordnung 30" gezeigt, die hinsichtlich Aufbau und Funktion generell der Aktuatoranordnung 30' der Fig. 2 entspricht. Gleiche Elemente sind daher durch gleiche Bezugszeichen gekennzeichnet. Im Folgenden werden im Wesentlichen die Unterschiede erläutert.

Bei der Aktuatoranordnung 30" wird die Arretier-Kolben/Zylinderanordnung 90 nicht mittels der Kühlungs-Druckquelle betätigt, sondern mittels der weiteren Aktuatorpumpe 32A'. Die Kühlungs-Druckquelle 50 kann dabei aufgebaut sein wie die Kühlungs-Druckquelle 50 der Fig. 1, insbesondere mit einer monodirektional wirkenden Kühlungs-Pumpe 52.

Bei der Aktuatoranordnung 30" ist die Arretier-Kolben/Zylinderanordnung 90 über eine Verbindungsleitung 102 mit dem Sauganschluss 36A' der weiteren Aktuatorpumpe 32A' verbunden. Der Druckanschluss 42A' der weiteren Aktuatorpumpe 32A' ist zum einen über Blende 48A' mit dem Tank 40 verbunden, und zum anderen über ein viertes Rückschlagventil 100 mit dem Tank verbunden.

Bei dieser Ausführungsform ist das vierte Rückschlagventil 100 geschlossen, wenn die weitere Aktuatorpumpe 32A' in einer Richtung betrieben wird, bei der Fluid aus dem Tank in Richtung hin zu dem weiteren Kupplungsaktuator 44A gefördert wird. Zur Verbesserung der Regelung ist hierbei eine Blende 48A' in der Leitung vorgesehen, die den Druckanschluss 42A' mit dem Tank 40 verbindet.

In der entgegengesetzten Drehrichtung der weiteren Aktuatorpumpe 32A' wird Fluid über das vierte Rückschlagventil 100 aus dem Tank 40 gefördert und an dem Sauganschluss 36A' bereitgestellt. Gegebenenfalls kann dort ein weiteres Rückschlagventil angeordnet sein. In der Regel kann jedoch auch ohne ein derartiges Rückschlagventil an dem Sauganschluss 36A' ein hinreichender Volumenstrom bereitgestellt werden, um über die Leitung 102 die Arretier-Kolben/Zylinderanordnung 90 aus der Arretierposition A in die Freigabeposition F zu versetzen.

Bei dieser Variante kann die Parksperrenanordnung 24 betätigt werden, wenn die weitere Reibkupplung 16A geöffnet ist oder wird.

In Fig. 3 ist ferner bei 104 angedeutet, dass die Arretier-Kolben/Zylinderanordnung 90 alternativ auch mit dem Druckanschluss 42A' der weiteren Aktuatorpumpe 32A' verbunden sein kann. In diesem Fall ist das vierte Rückschlagventil 100 nicht notwendig.

In diesem Fall ist die mechanische Vorspannfeder der Arretier-Kolben/Zylinderanordnung 90 vorzugsweise so ausgelegt, dass das Arretierglied 82', das mit dem Kolben der Arretier-Kolben/Zylinderanordnung 90 verbunden ist, dann nicht bewegt wird, wenn der Druck an dem Druckanschluss 42A' innerhalb eines normalen Arbeits-Druckbereiches der Reibkupplung 16A liegt. Erst dann, wenn an dem Druckanschluss 42A' ein Freigabedruck angelegt wird, der größer ist als der maximale Arbeitsdruck zum Betätigen der weiteren Reibkupplung 16A, wird das Arretierglied 82' in die Freigabeposition bewegt. Die weitere Kupplung 16A wird in diesem Zustand "überdrückt".

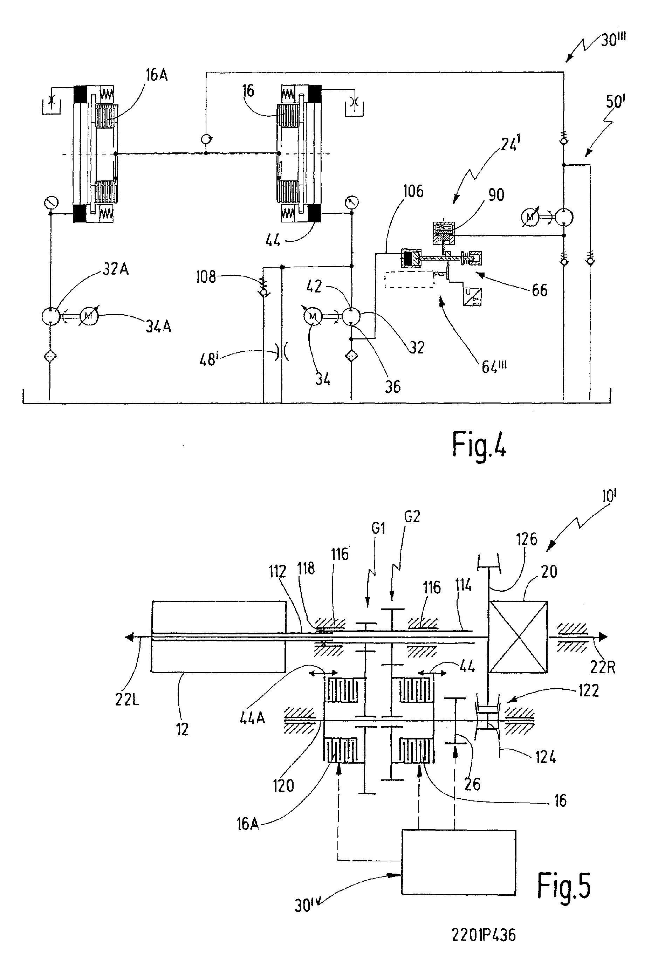

In Fig. 4 ist eine weitere Ausführungsform einer Aktuatoranordnung 30'" gezeigt, die generell der Aktuatoranordnung 30' der Fig. 2 entspricht. Insbesondere ist die Arretier-Kolben/Zylinderanordnung 90 mit der Kühlungs-Druckquelle 50' verbunden, die genauso ausgestaltet ist wie in Fig. 2.

Bei der Aktuatoranordnung 30'" ist die Parksperren-Kolben/Zylinderanordnung 66 jedoch nicht mit dem Druckanschluss 42 der Aktuatorpumpe 32 verbunden, sondern mit deren Sauganschluss 36.

In diesem Fall ist der Druckanschluss 42 der Aktuatorpumpe 32 über ein fünftes Rückschlagventil 108 mit dem Tank verbunden. Ferner kann eine Blende 48' ebenfalls in einer parallelen Leitung zwischen dem Druckanschluss 42 und dem Tank angeordnet sein.

In der einen Drehrichtung der Aktuatorpumpe 32 wird Fluid aus dem Tank 40 zum Druckanschluss 42 geführt. Das fünfte Rückschlagventil 108 ist hierbei geschlossen. Hierbei kann die Aktuatorpumpe 32 zum Befüllen des Kupplungsaktuators 44 dienen.

Bei Umkehrung der Drehrichtung wird über das fünfte Rückschlagventil 108 Fluid aus dem Tank 40 angesaugt und am Sauganschluss 36 zur Verfügung gestellt, der mit der Parksperren-Kolben/Zylinderanordnung 66 verbunden ist, um diese von der Schließposition S in die Offenposition O zu bewegen.

In Fig. 5 ist eine weitere Ausführungsform eines Antriebsstranges 10' gezeigt, der als Antriebsmotor 12 eine elektrische Maschine aufweist. Eine Motorwelle 112 ist als Hohlwelle ausgebildet und ist mit einer Zwischen-Hohlwelle 114 drehfest gekoppelt. Die Zwischen-Hohlwelle 114 ist mittels zweier Lager 116 an einem Gehäuse drehbar gelagert. Die Verbindung zwischen der Motorwelle 112 und der Zwischen-Hohlwelle 114 ist bei 118 gezeigt.

Der Antriebsstrang 10' weist ferner eine Vorgelegewelle 120 auf. Die Zwischen-Hohlwelle 114 und die Vorgelegewelle 120 sind über zwei Radsätze zum Einrichten von zwei Gangstufen G1, G2 miteinander verbunden. Die entsprechenden Festräder sind an der Zwischen-Hohlwelle 114 festgelegt. Die jeweiligen Losräder sind drehbar an der Vorgelegewelle 120 gelagert. An der Vorgelegewelle 120 sind ferner eine erste Reibkupplung 16 und eine weitere Reibkupplung 16A gelagert, wobei das Losrad der zweiten Gangstufe G2 mittels der ersten Reibkupplung 16 mit der Vorgelegewelle verbindbar ist, und wobei das Losrad der ersten Gangstufe G1 mittels der weiteren Reibkupplung 16A mit der Vorgelegewelle 120 verbindbar ist.

Die Vorgelegewelle 120 ist über einen Abtriebsradsatz 122 mit dem Differential 20 verbunden. Der Abtriebsradsatz 122 weist ein erstes Zahnrad 124 auf, das mit der Vorgelegewelle 120 verbunden ist, sowie ein zweites Zahnrad 126, das mit einem Eingangsglied des Differentials 20 verbunden ist.

Vorliegend ist das Differential koaxial zu der Motorwelle 112 angeordnet, derart, dass die eine Abtriebswelle für das angetriebene Rad 22L durch die Zwischen-Hohlwelle 114 und durch die Motorwelle 112 sowie durch die elektrische Maschine 12 hindurchgeführt ist. Das Differential 20 kann jedoch auch parallel versetzt zu der Motorwelle 112 angeordnet sein.

An der Vorgelegewelle 120 ist ferner ein Parksperrenrad 26 festgelegt. Jede der Aktuatoranordnungen 30', 30", 30'" der Figuren 2 bis 4 lässt sich als Aktuatoranordnung 30^{IV} für den Antriebsstrang 10' der Fig. 5 verwenden, wie es schematisch durch Pfeile angedeutet ist.

## Patentansprüche

1. Aktuatoranordnung (30) für einen Antriebsstrang (10), mit einer elektromotorisch angetriebenen Aktuatorpumpe (32), mit einem Kupplungsaktuator (44), der zur Betätigung einer Reibkupplung (16) des Antriebsstranges (10) ausgebildet ist und der mit einem Druckanschluss (42) der Aktuatorpumpe (32) verbunden ist, und mit einem Parksperrenaktuator (64), der zur Betätigung einer Parksperrenanordnung (24) des Antriebsstranges (10) ausgebildet ist, wobei der Parksperrenaktuator (64) eine Offenposition (O), in der die Parksperrenanordnung (24) gelöst ist, und eine Schließposition (S) aufweist, in der die Parksperrenanordnung (24) geschlossen ist, und wobei der Parksperrenaktuator (64) ebenfalls mit dem Druckanschluss (42) der Aktuatorpumpe (32) verbunden ist,
**dadurch gekennzeichnet, dass**
der Kupplungsaktuator (44) und der Parksperrenaktuator (64) direkt mit dem Druckanschluss (42) der Aktuatorpumpe (32) verbunden sind, wobei die Parksperrenanordnung (24) mittels einer Arretiereinrichtung (80) in der Offenposition (O) und/oder in der Schließposition (S) arretierbar ist.

2. Aktuatoranordnung nach Anspruch 1, **dadurch gekennzeichnet, dass** der Parksperrenaktuator (64) einen mit der Parksperrenanordnung (24) mechanisch verbundenen Parksperrenkolben (70) aufweist.

3. Aktuatoranordnung nach Anspruch 2, **dadurch gekennzeichnet, dass** der Parksperrenkolben (70) in Richtung der Schließposition (S) vorgespannt ist.

4. Aktuatoranordnung nach Anspruch 2 oder 3, **dadurch gekennzeichnet, dass** der Parksperrenkolben (70) Bestandteil einer Parksperren-Kolben/Zylinderanordnung (66) ist, wobei eine Vorspanneinrichtung (72) zum Vorspannen des Parksperrenkolbens (70) in die Schließposition (S) an einem Abschnitt des Parksperrenkolbens (70) angreift, der außerhalb eines Parksperrenzylinders (68) der ParksperrenKolben/Zylinderanordnung (66) angeordnet ist.

5. Aktuatoranordnung nach einem der Ansprüche 1 - 4, **dadurch gekennzeichnet, dass** die Arretiereinrichtung (80) an einem Arretiervorsprung (86) angreift, der mit einem Parksperrenkolben (70) oder einem Parksperrenglied (28) der Parksperrenanordnung (24) verbunden ist.

6. Aktuatoranordnung nach einem der Ansprüche 1 - 5, **dadurch gekennzeichnet, dass** die Arretiereinrichtung (80) eine Arretierposition (A) und eine Freigabeposition (I) aufweist, wobei die Arretiereinrichtung (80) in die Arretierposition (A) vorgespannt ist.

7. Aktuatoranordnung nach einem der Ansprüche 1 - 6, **dadurch gekennzeichnet, dass** die Arretiereinrichtung (80) mittels eines Elektromagnetaktuators (84) betätigbar ist.

8. Aktuatoranordnung nach einem der Ansprüche 1 - 7, **dadurch gekennzeichnet, dass** der Antriebsstrang (10) eine weitere Reibkupplung (16A) aufweist, die mittels eines weiteren Kupplungsaktuators (44A) betätigbar ist, der mit dem Druckanschluss (42A') einer weiteren Aktuatorpumpe (32A') verbunden ist, wobei die Arretiereinrichtung (90) mittels der weiteren Aktuatorpumpe (32A') betätigbar ist.

9. Aktuatoranordnung nach Anspruch 8, **dadurch gekennzeichnet, dass** eine Arretier-Kolben/Zylinderanordnung (90) mit dem Druckanschluss (42A') der weiteren Aktuatorpumpe (32A') verbunden ist, wobei die Arretier-Kolben/Zylinderanordnung (90) in eine Arretierposition (A) vorgespannt ist, wobei die Vorspannung so gewählt ist, dass zum Bewegen der Arretier-Kolben/Zylinderanordnung (90) in eine Freigabeposition (F) ein Freigabedruck an die Arretier-Kolben/Zylinderanordnung (90) anzulegen ist, der größer ist als ein maximaler Arbeitsdruck zum Betätigen der weiteren Reibkupplung (16A).

10. Aktuatoranordnung nach einem der Ansprüche 1 - 9, **dadurch gekennzeichnet, dass** der Parksperrenaktuator (64) mittels einer Arretiereinrichtung (80) in einer Offenposition (O) und/oder in einer Schließposition (S) arretierbar ist, wobei die Arretiereinrichtung (80) mittels einer Kühlungs-Druckquelle (50') betätigbar ist, die zur Kühlung wenigstens einer Komponente (16, 16A; 12) des Antriebsstranges (10) ausgebildet ist.

11. Aktuatoranordnung nach Anspruch 10, **dadurch gekennzeichnet, dass** die Kühlungs-Druckquelle (50') zur Kühlung der Reibkupplung(en) (16, 16A) und/oder zur Kühlung eines Antriebsmotors (12) ausgebildet ist.

12. Aktuatoranordnung nach Anspruch 10 oder 11, **dadurch gekennzeichnet, dass** die Kühlungs-Druckquelle (50') eine elektromotorisch bidirektional angetriebene Kühlungs-Pumpe (52') aufweist, deren Druckanschluss (58) mit der zu kühlenden Komponente (16, 16A; 12) verbunden ist und deren Sauganschluss (92) mit einer Arretier-Kolben/Zylinderanordnung (90) der Arretiereinrichtung (80) verbunden ist.

13. Antriebsstrang (10) für ein Kraftfahrzeug mit wenigstens einer Reibkupplung (16) und einer Parksperrenanordnung (24) sowie mit einer Aktuatoranordnung (30) nach einem der Ansprüche 1 - 12.

## Claims

1. Actuator arrangement (30) for a drive train (10), having an actuator pump (32) driven by electric motor, having a clutch actuator (44), which is designed for actuation of a friction clutch (16) of the drive train (10) and which is connected to a discharge port (42) of the actuator pump (32), and having a parking lock actuator (64), which is designed for actuation of a parking lock arrangement (24) of the drive train (10), wherein the parking lock actuator (64) has an open position (O), in which the parking lock arrangement (24) is released, and a closed position (S), in which the parking lock arrangement (24) is closed, and wherein the parking lock actuator (64) is likewise connected to the discharge port (42) of the actuator pump (32),
**characterized in that**
the clutch actuator (44) and the parking lock actuator (64) are connected directly to the discharge port (42) of the actuator pump (32), wherein the parking lock arrangement (24) can be retained in the open position (O) and/or in the closed position (S) by means of a retaining device (80).

2. Actuator arrangement according to Claim 1, **characterized in that** the parking lock actuator (64) has a parking lock piston (70), which is mechanically connected to the parking lock arrangement (24).

3. Actuator arrangement according to Claim 2, **characterized in that** the parking lock piston (70) is preloaded in the direction of the closed position (S).

4. Actuator arrangement according to Claim 2 or 3, **characterized in that** the parking lock piston (70) is part of a parking lock piston/cylinder arrangement (66), wherein, for the purpose of preloading the parking lock piston (70) into the closed position (S), a preloading device (72) engages on a section of the parking lock piston (70) which is arranged outside a parking lock cylinder (68) of the parking lock piston/ cylinder arrangement (66).

5. Actuator arrangement according to one of Claims 1-4, **characterized in that** the retaining device (80) engages on a retaining projection (86) connected to a parking lock piston (70) or to a parking lock member (28) of the parking lock arrangement (24).

6. Actuator arrangement according to one of Claims 1-5, **characterized in that** the retaining device (80) has a retaining position (A) and a release position (I), wherein the retaining device (80) is preloaded into the retaining position (A).

7. Actuator arrangement according to one of Claims 1-6, **characterized in that** the retaining device (80) can be actuated by means of a solenoid actuator (84).

8. Actuator arrangement according to one of Claims 1-7, **characterized in that** the drive train (10) has a further friction clutch (16A), which can be actuated by means of a further clutch actuator (44A), which is connected to the discharge port (42A') of a further actuator pump (32A'), wherein the retaining device (90) can be actuated by means of the further actuator pump (32A').

9. Actuator arrangement according to Claim 8, **characterized in that** a retaining piston/cylinder arrangement (90) is connected to the discharge port (42A') of the further actuator pump (32A'), wherein the retaining piston/cylinder arrangement (90) is preloaded into a retaining position (A), wherein the preloading is chosen in such a way that a release pressure greater than a maximum working pressure for actuating the further friction clutch (16A) has to be applied to the retaining piston/ cylinder arrangement (90) to move the retaining piston/cylinder arrangement (90) into a release position (F).

10. Actuator arrangement according to one of Claims 1-9, **characterized in that** the parking lock actuator (64) can be retained in an open position (O) and/or in a closed position (S) by means of a retaining device (80), wherein the retaining device (80) can be actuated by means of a cooling pressure source (50'), which is designed for cooling at least one component (16, 16A; 12) of the drive train (10).

11. Actuator arrangement according to Claim 10, **characterized in that** the cooling pressure source (50') is designed for cooling the friction clutch(es) (16, 16A) and/or for cooling a drive motor (12).

12. Actuator arrangement according to Claim 10 or 11, **characterized in that** the cooling pressure source (50') has a cooling pump (52'), which is driven bidirectionally by electric motor, the discharge port (58) of which is connected to the component (16, 16A; 12) to be cooled and the suction port (92) of which is connected to a retaining piston/cylinder arrangement (90) of the retaining device (80).

13. Drive train (10) for a motor vehicle having at least one friction clutch (16) and a parking lock arrangement (24) and having an actuator arrangement (30) according to one of Claims 1-12.

## Revendications

1. Agencement d'actionneur (30) pour une chaîne cinématique (10), comprenant une pompe d'actionneur (32) entraînée par un moteur électrique, un actionneur d'embrayage (44) qui est réalisé pour actionner un embrayage à friction (16) de la chaîne cinématique (10) et qui est connecté à un raccord de pression (42) de la pompe d'actionneur (32), et un actionneur de verrouillage de stationnement (64) qui est réalisé pour actionner un agencement de verrouillage de stationnement (24) de la chaîne cinématique (10), l'actionneur de verrouillage de stationnement (64) présentant une position ouverte (O) dans laquelle l'agencement de verrouillage de stationnement (24) est libéré, et une position fermée (S) dans laquelle l'agencement de verrouillage de stationnement (24) est fermé, et l'actionneur de verrouillage de stationnement (64) étant également connecté au raccord de pression (42) de la pompe d'actionneur (32),
**caractérisé en ce que**
l'actionneur d'embrayage (44) et l'actionneur de verrouillage de stationnement (64) sont connectés directement au raccord de pression (42) de la pompe d'actionneur (32), l'agencement de verrouillage de stationnement (24) pouvant être bloqué au moyen d'un dispositif de blocage (80) dans la position ouverte (O) et/ou dans la position fermée (S).

2. Agencement d'actionneur selon la revendication 1, **caractérisé en ce que** l'actionneur de verrouillage de stationnement (64) présente un piston de verrouillage de stationnement (70) connecté mécaniquement à l'agencement de verrouillage de stationnement (24).

3. Agencement d'actionneur selon la revendication 2, **caractérisé en ce que** le piston de verrouillage de stationnement (70) est précontraint dans la direction de la position fermée (S).

4. Agencement d'actionneur selon la revendication 2 ou 3, **caractérisé en ce que** le piston de verrouillage de stationnement (70) fait partie d'un agencement de verrouillage de stationnement à cylindre/piston (66), un dispositif de précontrainte (72) pour précontraindre le piston de verrouillage de stationnement (70) venant en prise dans la position fermée (S) avec une portion du piston de verrouillage de stationnement (70) qui est disposée à l'extérieur d'un cylindre de verrouillage de stationnement (68) de l'agencement de verrouillage de stationnement à cylindre/piston (66).

5. Agencement d'actionneur selon l'une quelconque des revendications 1 à 4, **caractérisé en ce que** le dispositif de blocage (80) vient en prise avec une saillie de blocage (86) qui est connectée à un piston de verrouillage de stationnement (70) ou à un organe de verrouillage de stationnement (28) de l'agencement de verrouillage de stationnement (24).

6. Agencement d'actionneur selon l'une quelconque des revendications 1 à 5, **caractérisé en ce que** le dispositif de blocage (80) présente une position de blocage (A) et une position de libération (I), le dispositif de blocage (80) étant précontraint dans la position de blocage (A).

7. Agencement d'actionneur selon l'une quelconque des revendications 1 à 6, **caractérisé en ce que** le dispositif de blocage (80) peut être actionné au moyen d'un actionneur électromagnétique (84).

8. Agencement d'actionneur selon l'une quelconque des revendications 1 à 7, **caractérisé en ce que** la chaîne cinématique (10) présente un embrayage à friction supplémentaire (16A) qui peut être actionné au moyen d'un actionneur d'embrayage supplémentaire (44A), qui est connecté par le biais du raccord de pression (42A') à une pompe d'actionneur supplémentaire (32A'), le dispositif de blocage (90) pouvant être actionné au moyen de la pompe d'actionneur supplémentaire (32A').

9. Agencement d'actionneur selon la revendication 8, **caractérisé en ce qu'**un agencement de blocage à cylindre/piston (90) est connecté au raccord de pression (42A') de la pompe d'actionneur supplémentaire (32A'), l'agencement de blocage à cylindre/piston (90) étant précontraint dans une position de blocage (A), la précontrainte étant sélectionnée de telle sorte que pour le déplacement de l'agencement de blocage à cylindre/piston (90) dans une position de libération (F), une pression de libération doive être appliquée à l'agencement de blocage à cylindre/piston (90), laquelle pression est supérieure à une pression de travail maximale pour l'actionnement de l'embrayage à friction supplémentaire (16A).

10. Agencement d'actionneur selon l'une quelconque des revendications 1 à 9, **caractérisé en ce que** l'actionneur de verrouillage de stationnement (64) peut être bloqué au moyen d'un dispositif de blocage (80) dans une position ouverte (O) et/ou dans une position fermée (S), le dispositif de blocage (80) pouvant être actionné au moyen d'une source de pression de refroidissement (50') qui est réalisée pour refroidir au moins un composant (16, 16A ; 12) de la chaîne cinématique (10).

11. Agencement d'actionneur selon la revendication 10, **caractérisé en ce que** la source de pression de refroidissement (50') est réalisée pour refroidir le ou les embrayage(s) à friction (16, 16A) et/ou pour refroidir un moteur d'entraînement (12).

12. Agencement d'actionneur selon la revendication 10 ou 11, **caractérisé en ce que** la source de pression de refroidissement (50') présente une pompe de refroidissement (52') entrainée dans deux directions par un moteur électrique, dont le raccord de pression (58) est connecté au composant à refroidir (16, 16A ; 12), et dont le raccord d'aspiration (92) est connecté à un agencement de blocage à cylindre/piston (90) du dispositif de blocage (80).

13. Chaîne cinématique (10) pour un véhicule automobile comprenant au moins un embrayage à friction (16) et un agencement de verrouillage de stationnement (24) ainsi qu'un agencement d'actionneur (30) selon l'une quelconque des revendications 1 à 12.
